# EUROPEAN PATENT SPECIFICATION

(11) **EP 1 257 890 B1**
(45) Date of publication and mention of the grant of the patent: **10.10.2007**
(21) Application number: 01902964.4
(22) Date of filing: 18.01.2001
(51) Int. Cl.: G06F 1/00, H04L 29/06, H04L 29/12

(54) **SYSTEM AND METHOD FOR USING DIRECTORY SERVICES TO FACILITATE ACCESS TO APPLICATIONS AVAILABLE ON THIN CLIENT SERVERS**
SYSTEM UND VERFAHREN ZUR VERWENDUNG VON VERZEICHNISDIENSTENZUR ERLEICHTERUNG DES ZUGANGS ZU AUF THIN-CLIENT-SERVERN VERFÜGBAREN ANWENDUNGEN
SYSTEME ET PROCEDE D'UTILISATION DES SERVICES REPERTOIRE DESTINES A FACILITER L'ACCES AUX APPLICATIONS DISPONIBLES SUR DES SERVEURS CLIENTS LEGERS

(30) Priority: 18.01.2000 US 484451
(43) Date of publication of application: 20.11.2002
(73) Proprietor: Novell, Inc., Provo, Utah 84606 (US)
(72) Inventor: JNEID, Amer, Laguna Niguel, CA 92677 (US)
(74) Representative: Hanna, Peter William Derek
(86) International application number: PCT/US2001/000017
(87) International publication number: WO 2001/055813

(56) References cited:
- EP-A- 0 817 444
- US-A- 5 455 953
- US-A- 5 544 320
- B. ANDERSON, R. LOPEZ, B. CALERO, E. LEE: "Integrating Thin-Client Servers with the Novell Suite of Products"[Online] 21 April 1999 (1999-04-21), pages 1-61, XP002387136 Retrieved from the Internet: URL:http://www.novell.com/coolsolutions/ze nworks/assets/thin_clients.pdf> [retrieved on 2006-06-26]
- MAASS H.: 'Location-aware mobile applications based on directory services' MOBILE NETWORKS AND APPLICATIONS vol. 3, 1998, pages 157 - 173, XP002944610

## Description

### BACKGROUND OF THE INVENTION

### 1. Field of the Invention

This invention relates to the field of server-based or "thin client" computing, in which application programs are run on a remote server, and only screen updates, keystrokes, and mouse clicks are transferred between the remote server and the user's computing device.

The system of the invention is especially applicable to application servers which utilize Microsoft's Windows NT Server, Terminal Server Edition, known as Windows Terminal Server, and to Citrix Systems' MetaFrame^{®} application server software.

More specifically, the invention relates
(i) to a system and method for storing and managing information concerning published application programs remotely run on a thin client server (hereinafter referred to as "published applications" or "published application programs") so that a user can retrieve information published application programs from a single source, known as a directory service, and thereby locate and access the published application programs irrespective of the number and actual locations of the thin client servers on which the published application programs are run, and
(ii) to a single sign-on system and method which permits the user to authenticate to the directory service and subsequently access any application listed or "published" on the directory service, whether of the conventional or thin client type.

In the system of the invention, an information package concerning each of the thin client applications to be made available is published in the directory service, and access to the thin client application programs is established by running a first client program associated with the server on which the thin client application is located, and a pre-launched second client program that supplies sign-on and authentication information from the directory service to the first client program. The first client program may be the Citrix Systems' Independent Computing Architecture (ICA^{®}) client currently used to launch MetaFrame^{®} published applications, or any other published application launching program, while the directory services may be provided by Novell Directory Services^{™} (NDS^{®}), Novell ZENworks^{®} (which integrates NDS^{®}), or by any other directory services application program capable of carrying out the functions described below.

### 2. Description of Related Art

As anyone who manages computer networks or systems for an organization is aware, the task of keeping up with the latest software updates, and of keeping hardware current, is becoming increasingly complex. As the organization grows and new computing equipment is added, the number of different types of computing devices inevitably increases because the added equipment will incorporate any changes in hardware or software made since the last addition of equipment. Each of these different computing devices must be supplied with applications programs and program updates tailored to the individual devices, while preferably maintaining overall system compatibility.

One way to reduce costs, ensure software compatibility, and yet provide for the latest updates, is to utilize the concept of server based or thin client computing, in which the end-user's computing device only needs to be able to communicate keyboard entries, mouse clicks, or other input signals to the thin client server, and to update the end-user's display as the application is run, thereby minimizing the cost of the hardware and simplifying software maintenance.

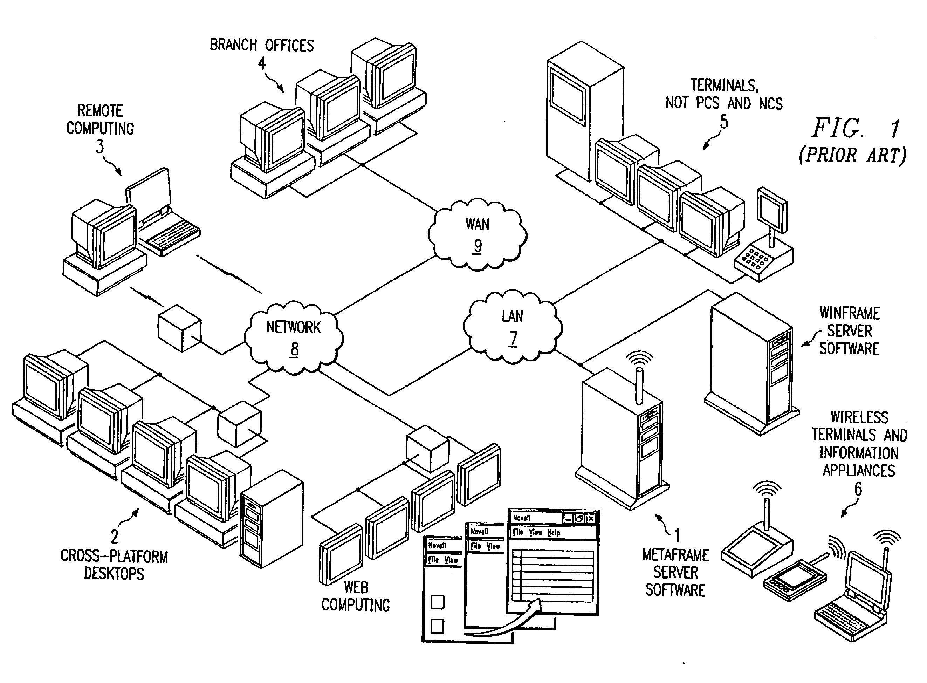

An especially versatile example of such a thin client computing system is Citrix Systems' Independent Computing Architecture (ICA), illustrated in Fig. 1, implemented using Citrix Systems' MetaFrame'" server software, which enables applications to be run remotely through all commonly used communications protocols, including TCP/IP. In principle, the MetaFrame" server software can supply application programs to any computing device irrespective of configuration including, as shown in Fig. 1, cross-platform (non-Windows^{™}) desktops 2, remote computing devices 3, branch office systems 4, thin client terminals 5, and wireless terminals 6, and through any type of network or combination of networks including, as also shown in Fig. 1, local area networks (LANs) 7, the Internet 8, or corporate wide area networks (WANs) 9.

In practice, however, the ability to supply thin client applications such as Metaframe^{®} published applications over a conventional system of the type shown in Fig. 1 has been limited by difficulties in broadcasting the availability of the published applications when the conventional system is expanded or scaled to include multiple thin client servers and/or multiple load-balanced groups of servers (known as server farms) at dispersed locations on an open network such as the Internet. Internet servers are currently set up to locate addresses of computers without regard to what is on those computers, while conventional Internet search engines lack the ability to supply the type of information necessary to not only locate server on which a particular published application is available, but to select the server and facilitate sign-on.

Thus, use of thin client technology has been unnecessarily limited, despite its obvious advantages, by the current lack of any way to supply thin client application over the Internet, and in particular by the lack of solutions to the problems of (i) broadcasting the published applications, i.e., informing users how to find and access the thin client servers on which desired published application programs are located, (ii) selecting from among multiple thin client servers on which the published applications are available, (iii) tracking usage of published applications for billing and/or licensing purposes, and (iv) handling multiple authentication procedures and passwords necessary to access different thin client servers.

Ideally, a user of a thin client application should be able to access published applications in the same manner as an application stored on a local drive, e.g., by clicking on an icon representing the application, without being aware that the application is a thin client application, much less having to locate and select suitable thin client servers, or having to undergo the particular authentication and sign-on procedures required before published applications can actually be accessed on the selected server. Such transparent server location, selection, and sign-on is currently impossible.

In addition to the problems of locating and accessing published applications, many conventional thin client computing arrangements, including MetaFrame server systems, are subject to security risks resulting from the local storage, in text based configuration files, of sign-on and authentication information such as account numbers and passwords necessary to access the thin client applications. While it is not necessary in these systems to locally store the sign-on and authentication information, in practice most users elect to store the information in order to simply sign-on by eliminating the need to recall and enter the information each time a published application is to be accessed. In the case of MetaFrame^{®} server software, the text based configuration files are known as appsrv.ini files.

Yet another problem with conventional thin client arrangements is the problem of time zone management, which may arise when the thin client server is in a different time zone than the client computer and the remotely run published application program is a time sensitive program. Although it is currently not practical to run thin client programs from multiple servers or server farms over the Internet, where the time zone problem would be most severe, the problem can nevertheless arise on private corporate networks due to the widely dispersed, and even global nature, of many corporations.

To solve these and other problems, the present invention proposes to use a directory service to "publish" or store information concerning the thin client applications. Directory services are currently used to facilitate management of networks by listing each application and piece of equipment available on the network, and associating the equipment and applications with users. The equipment and applications are conveniently tracked by a directory service as objects in a directory tree, the directory service essentially maintaining records on each object by tracking changes and updating the object records files as necessary. When a user signs onto the network, the directory service or a related implementation program authenticates the user, and then manages requests for access to the various objects on the network. New software and updates are distributed as necessary based on stored profiles, and the directory service is updated to reflect the changes.

Such directory services are well-known, and provide a convenient centralized way for the network manager to manage a network. However, directory servers have not heretofore been applied, at least in the manner of the invention, to a server-based or thin client computing system such as the Citrix Systems' MetaFrame^{®} server system, which differs fundamentally from the conventional directory service managed network not only in its ability to use thin clients, but also in that the published application servers may not be under the direct control of the network administrator, may be situated at arbitrary locations, and are accessed by an independent client associated with the thin client system rather than by the directory service or directory services implemented program, and to which information from the directory service must be supplied. In order for a directory service to be useful in such a context, the directory service arrangement must be able to provide information on any thin client servers containing desired applications. This characteristic is known as "scalability."

The directory services enabled thin client server of the invention is not to be confused with a thin client server system that uses directory services to manage a desktop on a particular thin client server or server farm, as described in a white paper dated April 21, 1999, and entitled "An Implementation Guide For Integrating Thin-Client Servers Wi th The Novell's ZENworks , and NDS Products," prepared by B. Anderson, R. Lopez, B. Calero, and E. Lee, and published on Novell, Inc.'s website at http://www.novell.com/coolsolutions/zenworks/features/a_i ntegrating_thin_client_servers_zw.html.

The approach described in the white paper, which provides more convenient management of a particular thin client server, is not related to the present invention despite its use of a directory service in a thin client context. Instead of using directory services to publish or keep track of the thin client applications, i.e., to store authorized server lists, registration and user access information, and so forth, the prior approach uses the directory to actually manage the thin client server as a desktop, essentially replacing or forming a shell on top of the existing thin client server architecture. Thus, although it provides centralized management of a particular server, group of servers, or server farm, the prior approach completely lacks scalability, and does not address the problem of how to locate the thin client published application in the first place, or of authenticating to these published applications that may be run on different, non-centrally managed servers or server farms.

No other prior or related art is known which seeks to combine thin client servers and directory services. Background on directory services, and in particular on snap-in modules for NDS, can be found in U.S. Patent Nos. 5,859,978, 5,987,471, and 5,991,810, while U.S. Patent Nos. 5,818,936 and 5,892,828 discuss sign-on and authentication procedures for NDS. Other patents more generally related to directory services include U.S. Patent Nos. 5,862,325, 5,826,027, 5,913,033, 5,918,039, and 5,941,949. Server-based or thin client computing systems are described in U.S. Patent Nos. 5,826,027, 5,913,033, 5,918,039, and 5,941,949.

As thin-client technology becomes increasingly critical, the need increases for management software that can integrate thin client applications management with the more traditional applications management provided by directory service programs such as NDS^{®} and ZENworks^{®}. By facilitating access to the remotely run applications using directory services, the invention offers the network administrator far greater flexibility in delivering applications to users of the network, including the option of switching between locally and remotely run applications in case of a local system crash or inadequacy of hardware on the network, as well as the ability to consolidate reporting and auditing functions for both the locally and remotely run applications, and to provide end-users with common access to both locally and remotely run applications using the same relatively simple sign-on and authentication procedures, in a manner that can be made completely transparent to the end-users.

### SUMMARY OF THE INVENTION

The present invention provides a server based computer system with integrated directory services and a method for same in accordance with the claims which follow

### BRIEF DESCRIPTION OF THE DRAWINGS

Fig. 1 is a schematic diagram of a MetaFrame^{®} environment to which the present application is applicable.
Fig. 2 is a schematic diagram of a directory-enabled MetaFrame^{®} system arranged in accordance with the principles of the preferred embodiment of the invention.
Fig. 3A is a flowchart illustrating a thin client application sign-on procedure according to the principles of a first preferred embodiment of the invention.
Fig. 3B is a flowchart illustrating a thin client application sign-on procedure according to a second preferred embodiment of the invention.

### DETAILED DESCRIPTION OF THE PREFERRED EMBODIMENTS

The detailed description set forth below describes a preferred embodiment of the invention in connection with Citrix Systems MetaFrame^{®} server and MetaFrame' published applications, and also in connection with Novell Directory Services^{™} and ZENworks^{®}. Those skilled in the art will appreciate, however, that the MetaFrame' server is cited as an example of one type of server-based computing system or thin-client server, and that the invention is not to be limited to the Citrix Systems thin client server system. In addition, those skilled in the art will appreciate that NDS^{®} is but one type of directory services, and that the invention is not to be limited to any particular directory services.

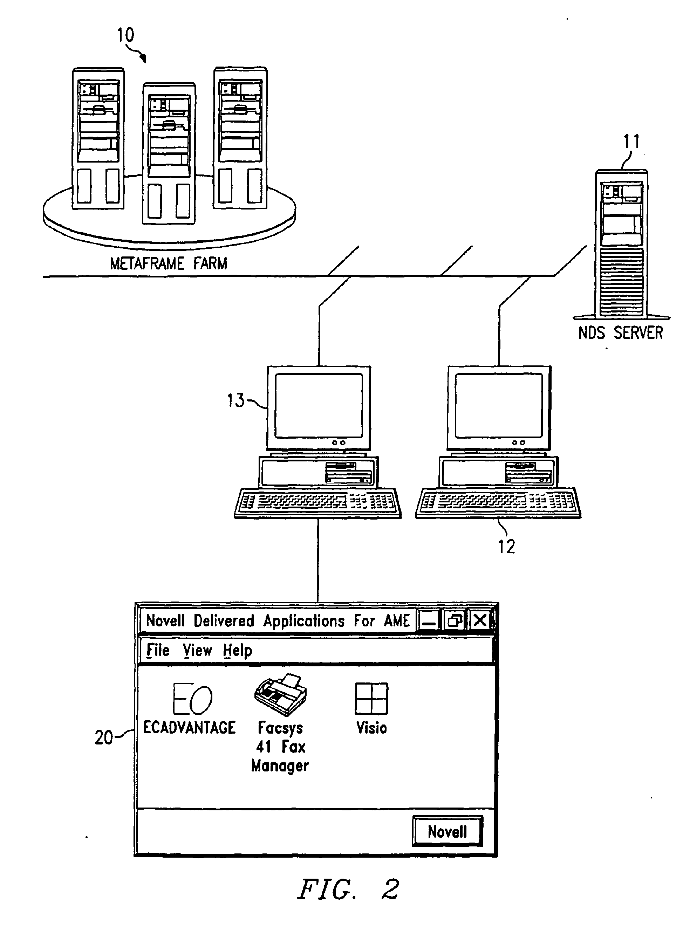

As shown in Fig. 2, the system of the invention includes a server or server farm 10 of a MetaFrame or other server-based computing system and an NDS^{®} server 11 running directory services. Server 11 is accessed through an administrator PC 12 running an administration program such as NWADMIN or ZENworks with a snap-in that adds a MetaFrame^{®} server object, i.e., the software necessary to publish applications so that they can be accessed and run on the server or server farm 10, to the objects in the directory services directory tree. The creation of the MetaFrame^{®} server object in the directory services permits the administrator to create published applications and distribute them to remote servers so that the applications can be run, and also to easily update the directory tree to reflect the newly published applications or any changes to previously published applications. At the same time, the administration program associates published applications with end-users or groups of end-users and/or their computing devices 13.

In the meantime, information on the published applications is also supplied to a service running on each thin client server or server farm on which the published applications are to be run, and the local registry of the thin client servers is updated with the proper information so that the thin client servers will respond to sign-on requests. The actual applications to be run may be distributed by a directory services based network management program such as ZENworks^{®}.

With this system, and the corresponding method of configuring the directory services to publish thin client applications in the directory tree, and associating the published applications to end users, the invention permits the network manager to manage thin client applications as easily as other network applications, to roll out new applications and even to seamlessly switch between a thin client application and a corresponding network application, for example upon failure of the network application, with all arbitration being carried out at the network level. The system and method of the invention also allows thin client applications servers to be selected based on such criteria as the time zone of the server.

When an end-user signs on to directory services, the end-user is authenticated by directory services, which provides the end-user with an application launcher that enables the end-user to launch any applications to which the end-user is authorized without requiring separate authentication for each application to be launched. In the case of a thin client application, the application launcher serves to retrieve from the directory the information necessary to contact and run the thin client application, using a first client program associated with the thin client application server system.

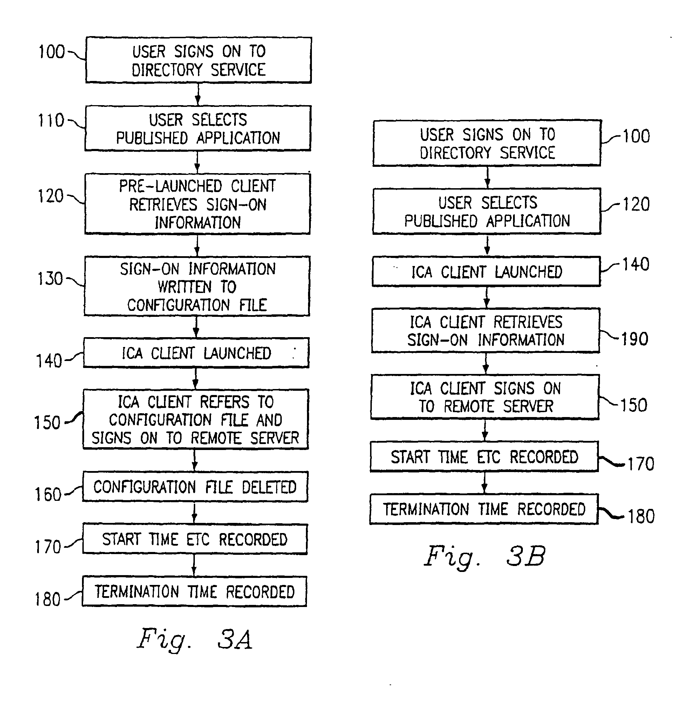

In a first preferred embodiment of the invention, as illustrated in Fig. 3A, when an end-user wishes to access a published application, the end-user must first sign-on to the directory service (step 100), which authenticates the user and presents the user with a screen (element 20 in Fig. 2) that includes icons for each available application. Upon selecting an application (step 110), the directory service or directory service management program pre-launches a client that retrieves information on the selected published application from the directory service, including the location of thin client servers running the application, and any necessary passwords, i.d. numbers, and other registration and authentication information (step 120) and writes the information to a temporary text-based configuration file such as appsrv.ini (step 130). The directory service or directory service management program then launches the appropriate thin client application launching client, such as the Citrix Systems ICA client (step 140), which refers to the appsrv.ini file in its usual manner in order to log on to and run the thin client application (step 150).

Following sign-on, the system and method of this embodiment of the invention deletes the appsrv.ini file, which is no longer needed since the information is still available in the directory service for the next sign-on (step 160), and records in a database the start time of the application, the thin client server name, the user name, the user account number, the service level associated with the user, and the application (step 170). Subsequently, the pre-launched second client, which is now post-launched, records the time the application usage is terminated, or retrieves the usage termination time from the event log of the snap-in server object and records it in the database (step 180).

Alternatively, as shown in Fig. 3B, the thin client application launching client may be modified such that, after performing steps 100 and 110, steps 120 and 130 are replaced by the step 190 of directly retrieving the sign-on and authentication information from the directory service, before performing steps 140-180.

In either case, the operation of the various clients is transparent to the end-user, who simply selects the desired application and utilizes it as if it were running locally on the end-user's own computing device.

Having thus described a preferred embodiment of the invention in sufficient detail to enable those skilled in the art to make and use the invention, it will nevertheless be appreciated that numerous variations and modifications of the illustrated embodiment may be made without departing from of the invention. Accordingly, it is intended that the invention not be limited by the above description or accompanying drawings, but that it be defined solely in accordance with the appended claims.

## Claims

1. A server-based computing system with integrated directory services, comprising:
a module (11) for a directory services administration program, said module being arranged to store information concerning at least one thin client published application to be run on a thin client server, including a location of the server and user registration and authentication information; and
a first client program adapted to sign-on (150) to the application, wherein said first client program is adapted to utilize said stored information to accomplish sign-on to the application and **characterised in that** a pre-launched second client program is provided to retrieve (120) the information from said directory service module and write (130) the information to a text-based configuration file for use by said first client program.

2. A system as claimed in claim 1, wherein said second client program is adapted to delete (160) said text-based configuration file following sign-on.

3. A system as claimed in claim1, wherein said first client program is adapted to retrieve (190) said information directly from said directory service.

4. A system as claimed in claim 1, wherein a location of said thin client server is selected to be in a same time zone as an end-user's computing device.

5. A method of integrating a server-based computing system with directory services, comprising the steps of:
arranging a module in a directory services administration program to store information concerning at least one thin client published application to be run on a thin client server, said information including a location of the server and user registration and authentication information; and
causing a first client program to sign-on (150) to the application by utilizing said stored information to accomplish sign-on to the application, **characterised in that** the method further comprises the steps of pre-launching a second client program to retrieve (120) information from said directory service module and write (130) the information to a text-based configuration file for use by said first client program.

6. A method as claimed in claim 5, further comprising the step of deleting (160) said text-based configuration file following sign-on.

7. A method as claimed in claim 5, wherein said first client program retrieves (190) said information directly from said directory service.

## Patentansprüche

1. Serverbasiertes Berechnungssystem mit integrierten Verzeichnungsdiensten, welches enthält:
ein Modul (11) für ein Verzeichnungsdienst-Administrationsprogramm, wobei das Modul dazu angeordnet ist, um eine Information bezogen auf zumindest eine Thin-Client veröffentlichte Anwendung, welche auf einem Thin-Client Server zu laufen ist, zu speichern, welche einen Ort des Servers und eine Benutzerregistrierung und eine Authentifizierungs-Information enthält; und
ein erstes Client-Programm, welches dazu angepasst ist, sich auf die Anwendung anzumelden (150), wobei das erste Client-Programm dazu angepasst ist, die gespeicherte Information zu verwenden, um ein Anmelden auf die Anwendung durchzuführen, und **dadurch gekennzeichnet ist, dass** ein voreingeführtes zweites Client-Programm dazu bereitgestellt ist, um die Information von dem Verzeichnungsdienst-Modul zu erlangen (120) und die Information auf eine textbasierte Konfigurationsdatei zur Verwendung durch das erste Client-Programm zu schreiben (130).

2. System nach Anspruch 1, bei welchem das zweite Client-Programm dazu angepasst ist, der Anmeldung folgend, die textbasierte Konfigurationsdatei zu löschen (160).

3. System nach Anspruch 1, bei welchem das erste Client-Programm dazu angepasst ist, um die Information direkt von dem Verzeichnisdienst zu erlangen (190).

4. System nach Anspruch 1, bei welchem ein Ort des Thin-Client Servers derart ausgewählt ist, dass er in einer gleichen Zeitzone wie eine Endnutzer-Berechnungsvorrichtung ist.

5. Verfahren zum Integrieren eines serverbasierten Berechnungssystems mit Verzeichnisdiensten, welches die Schritte enthält:
Anordnen eines Moduls in einem Verzeichnisdienst-Administrationsprogramm, um eine Information bezogen auf zumindest eine Thin-Client veröffentlichte Anwendung, welche auf einem Thin-Client Server zu laufen ist, zu speichern, wobei die Information einen Ort des Servers und eine Benutzerregistrierung und eine Authentifizierungs-Information enthält; und
Bewirken, dass sich ein erstes Client-Programm auf die Anwendung anmeldet (150), indem die gespeicherte Information dazu verwendet wird, um ein Anmelden auf die Anwendung durchzuführen, **dadurch gekennzeichnet, dass** das Verfahren ferner die Schritte eines Voreinführens eines zweiten Client-Programms, um die Information von dem Verzeichnisdienst-Modul zu erlangen (120), und eines Schreibens (130) von der Information auf eine textbasierte Konfigurationsdatei zur Verwendung durch das erste Client-Programm enthält.

6. Verfahren nach Anspruch 5, welches ferner, der Anmeldung folgend, den Schritt eines Löschens (160) der textbasierten Konfigurationsdatei enthält.

7. Verfahren nach Anspruch 5, bei welchem das erste Client-Programm die Information direkt von dem Verzeichnisdienst erlangt (190).

## Revendications

1. Système informatique basé sur serveur avec des services de répertoire intégrés, comprenant :
un module (11) pour un programme d'administration de services de répertoire, ledit module étant adapté pour mémoriser des informations concernant au moins une application publiée de client léger à exécuter sur un serveur de clients légers, incluant une position du serveur et des informations d'enregistrement et d'authentification d'utilisateur ; et
un premier programme client adapté pour ouvrir une session (150) pour une application, dans lequel ledit premier programme client est adapté pour utiliser lesdites informations mémorisées pour accomplir l'ouverture de session pour l'application et
**caractérisé en ce qu'**un deuxième programme client préalablement lancé est fourni pour récupérer (120) les informations à partir dudit module de services de répertoire et écrire (130) les informations dans un fichier de configuration basé sur du texte destiné à être utilisé par ledit premier programme client.

2. Système selon la revendication 1, dans lequel ledit deuxième programme client est adapté pour effacer (160) ledit fichier de configuration basé sur du texte à la suite de l'ouverture de session.

3. Système selon la revendication 1, dans lequel ledit premier programme client est adapté pour récupérer (190) lesdites informations directement à partir dudit service de répertoire.

4. Système selon la revendication 1, dans lequel une position dudit serveur de clients légers est sélectionnée pour être dans une même zone de temps qu'un dispositif informatique du côté de l'utilisateur final.

5. Procédé pour intégrer un système informatique basé sur serveur avec des services de répertoire, comprenant les étapes consistant à :
adapter un module dans un programme d'administration de services de répertoire pour mémoriser des informations concernant au moins une application publiée de client léger à exécuter sur un serveur de clients légers, lesdites informations comprenant une position du serveur et des informations d'enregistrement et d'authentification d'utilisateur ; et
forcer un premier programme client à ouvrir une session (150) pour une application en utilisant lesdites informations mémorisées pour accomplir l'ouverture de session pour l'application, **caractérisé en ce que** le procédé comprend en outre les étapes consistant à lancer préalablement un deuxième programme client pour récupérer (120) des informations à partir dudit module de services de répertoire et écrire (130) les informations dans un fichier de configuration basé sur le texte destiné à être utilisé par ledit premier programme client.

6. Procédé selon la revendication 5, comprenant en outre l'étape consistant à effacer (160) ledit fichier de configuration basé sur le texte à la suite de l'ouverture de session.

7. Procédé selon la revendication 5, dans lequel ledit premier programme client récupère (190) lesdites informations directement à partir dudit service de répertoire.
